# EUROPEAN PATENT SPECIFICATION

(11) **EP 4 124 475 B1**
(45) Date of publication and mention of the grant of the patent: **31.12.2025**
(21) Application number: 22171972.7
(22) Date of filing: 06.05.2022
(51) Int. Cl.: B60D 1/06, B60D 1/26, B60D 1/54

(54) **TRAILER HITCH COUPLER**
ANHÄNGERKUPPLUNG
COUPLEUR D'ATTELAGE DE REMORQUE

(30) Priority: 26.07.2021 CN 202121700816 U
(43) Date of publication of application: 01.02.2023
(73) Proprietor: Zhejiang Zhiyou Automotive Technology Co., Ltd., Zhejiang, Shaoxing 312500 (CN)
(72) Inventor: Xu, Naiyong, Shaoxing, 312500 (CN); Wang, Yu, Shaoxing, 312500 (CN); Shao, Junjian, Shaoxing, 312500 (CN); Xuan, Quanli, Shaoxing, 312500 (CN); Zhang, Dongyu, Shaoxing, 312500 (CN); Zhu, Fengdong, Shaoxing, 312500 (CN); Han, Zhengxin, Shaoxing, 312500 (CN); Liu, Ya, Shaoxing, 312500 (CN); Li, Tao, Shaoxing, 312500 (CN); Ding, Wenbing, Shaoxing, 312500 (CN); Sun, Lingxin, Shaoxing, 312500 (CN)
(74) Representative: karo IP

(56) References cited:
- EP-A1- 1 504 928
- EP-A1- 1 557 298
- EP-A1- 1 790 504
- EP-A1- 1 886 847
- EP-A1- 1 946 947
- EP-A1- 2 017 097
- EP-A1- 3 708 391
- EP-A1- 3 815 936
- WO-A1-2018/133888
- DE-A1- 10 243 045
- DE-A1- 102008 032 229
- DE-A1- 19 711 535
- US-B2- 10 189 323

## Description

### FIELD OF TECHNOLOGY

The present disclosure relates to a trailer hitch coupler of the kind comprising: a body secured to a vehicle body and a hitch, wherein the body comprises a main shaft and a fixed sleeve fixed relative to the vehicle body, the fixed sleeve being arranged to sleeve outside the main shaft, one end of the main shaft extending out of the fixed sleeve so as to be connected and synchronously rotate with the hitch; wherein the main shaft rotates to shift the hitch between a folded position and a unfolded position; one of the main shaft and the fixed sleeve is provided with a positioning groove, and the other one of the main shaft and the fixed sleeve is provided with a resilient assembly, such that when the hitch is disposed in the folded or unfolded position, the resilient assembly is inserted in the positioning groove so as to circumferentially position the main shaft. Such a trailer hitch coupler will be called "a trailer hitch coupler of the kind referred to" in the following description.

### BACKGROUND

People's demands on vehicle hitching performance increase with their pursuit of a more diversified way of life. A conventional trailer hitch coupler additionally mounted to a vehicle comprises a body and a hitch, wherein the body is secured on a vehicle body of the vehicle; a rotating shaft for actuating the hitch to rotate synchronously is provided on the body. Dependent on actual needs, the hitch is rotated beneath the vehicle body to a folded position or rotated outside the vehicle body to an unfolded position for hitching.

A trailer hitch coupler of the kind referred to is disclosed in each of the following prior art documents: DE 102 43 045 A1, WO 2018/133888 A1, EP 1 557 298 A1, DE 197 11 535 A1, and EP 1 946 947 A1.

In the trailer hitch coupler disclosed in DE 10243 045 A1 the hitch is shifted from the folded position into the unfolded position and vice versa by moving the main shaft axially relatively to the fixed sleeve before and after the main shaft is rotated relatively to the fixed sleeve. Locating projections integrally formed with the main shaft or the fixed sleeve and locating recesses integrally formed with the fixed sleeve or the main shaft are engaged with one another in the unfolded position of the hitch to lock the main shaft against rotation relative to the fixed sleeve in the unfolded position for hitching.

In the trailer hitch coupler disclosed in WO 2018/133888 A1, locking of the main shaft against rotation is performed by means for positioning the main shaft radially and circumferentially, which means for positioning include balls urged resiliently into recesses formed in the fixed sleeve.

Similarly, the trailer hitch couplers disclosed in EP 1 557 298 A1, DE 197 11 535 A1, and EP 1 946 947 A1 the main shaft is locked against rotation by positioning the main shaft circumferentially and radially in the unfolded position.

However, since the trailer hitch couplers of the prior art lock the main shaft only by positioning the rotating shaft radially and circumferentially for preventing rotation of the hitch, sway likely occurs when the hitch is in the folded position or unfolded position, which deteriorates hitching performance of the trailer hitch coupler.

### SUMMARY

To overcome the above and other drawbacks in the prior art, embodiments of the present disclosure provide a trailer hitch coupler, which is capable of simultaneously positioning a hitch circumferentially and locking the hitch against rotation in each of the folded and unfolded positions so as to prevent sway of the hitch in either position, thereby enhancing hitching performance of the trail hitch coupler.

To solve the above technical problems, the present disclosure adopts the following technical solution:
In a trailer hitch coupler of the kind referred to, the body further comprises a driving shaft, a locking member, and a transmission disc, wherein the locking member is rotatably mounted at an end face of the fixed sleeve, the driving shaft drives the transmission disc to idle such that the locking member unlocks the main shaft to rotate or locks the main shaft from rotation; wherein when the locking member unlocks the main shaft to rotate, the driving shaft drives, via the transmission disc, the main shaft to rotate; and wherein when the hitch is disposed in the folded or unfolded position, the locking member locks the main shaft from rotation. Furthermore, the main shaft or the fixed sleeve is provided with a mounting groove; the resilient assembly comprises a resilient member and a positioning member, wherein one end of the resilient member is inserted in the mounting groove and the other end of the resilient member is connected with the positioning member, the positioning member being pushed by the resilient member to be inserted in the positioning groove. Furthermore, the positioning groove is an arc-shaped groove, the positioning member is a steel ball or a positioning pin, and an end, which is inserted in the positioning groove, of the positioning pin has a spherical surface.

Furthermore, the locking member refers to a claw, a driving slot is provided on the transmission disc, and a locking slot is provided on the main shaft, such that when the claw is snapped into the driving slot and the locking slot, the claw locks the main shaft from rotation; and when the transmission disc rotates to release the claw out of the driving slot and the locking slot, the claw unlocks the main shaft to rotate. Furthermore, the claw is provided with a torsion spring configured to drive the claw to reset; and after the claw is reset, the claw is snapped into the driving slot and the locking slot.

Furthermore, a transmission post is provided on the transmission disc, and an arc-shaped transmitting groove is provided coaxially on the main shaft, wherein the transmission post is inserted into the arc-shaped transmitting groove, such that when the transmission disc drives the transmission post to move from a middle portion of the arc-shaped transmitting groove to an end portion of the arc-shaped transmitting groove, the claw is released out of the driving slot and the locking slot.

Furthermore, the body further comprises a connecting plate, the connecting plate being secured to the vehicle body, the fixed sleeve and the main shaft passing through the connecting plate; and a sealing disc is provided between the hitch and the connecting plate.

Furthermore, the hitch has a limit slot, and the main shaft is provided with a limit shoulder surface, wherein the end face of the fixed sleeve and the limit shoulder surface abut against a bottom surface of the limit slot, respectively, and an outer peripheral side of the fixed sleeve is fitted with a sidewall of the limit slot.

Furthermore, one end of the main shaft is connected with a nut which press-fits the hitch onto the limit shoulder surface, and a protective hood for occluding the main shaft is provided to cover an outer side of the nut, the protective hood being securely connected with the hitch via bolts.

The present disclosure offers the following advantages:
According to the present disclosure, when the hitch is disposed in the folded or unfolded position, the resilient assembly is inserted in the positioning groove so as to circumferentially position the main shaft, which prevents the main shaft from rotation; since the hitch is connected and rotates synchronously with the main shaft, sway of the hitch may be avoided by preventing rotation of the main shaft, which further enhances hitching performance of the trailer hitch coupler. When the hitch is disposed in the folded or unfolded position, the main shaft is further locked against rotation via the locking member, which may enhance circumferential positioning effect with respect to the main shaft, thereby further preventing sway of the hitch; additionally, the fixed sleeve provides a carrier for rotatably mounting the locking member, which simplifies body structure.

The main shaft or the fixed sleeve is provided with a mounting groove; the resilient assembly comprises a resilient member and a positioning member, wherein one end of the resilient member is inserted in the mounting groove and the other end of the resilient member is connected with the positioning member, the positioning member being pushed by the resilient member to be inserted in the positioning groove. With this configuration, when the hitch is disposed at the folded or unfolded position, the positioning member is pushed by the resilient member into the positioning groove so as to circumferentially position the main shaft; meanwhile, the positioning member may be released out of the positioning groove by compressing the resilient member such that the main shaft may rotate to further shift the hitch to the folded position or the unfolded position. Therefore, the present disclosure features a simpler overall structure and more convenient assembly.

The positioning groove is an arc-shaped groove, the positioning member is a steel ball or a positioning pin, an end, which is inserted in the positioning groove, of the positioning pin has a spherical surface. This configuration facilitates the positioning member to slide out of the positioning groove, thereby avoiding occurrence of jamming from deadlocking the main shaft.

The locking member refers to a claw, a driving slot is provided on the transmission disc, and a locking slot is provided on the main shaft, such that when the claw is snapped into the driving slot and the locking slot, the claw locks the main shaft from rotation; and when the transmission disc rotates to release the claw out of the driving slot and the locking slot, the claw unlocks the main shaft to rotate. With such a configuration, when the transmission disc is idling, a slot wall of the driving slot is driven to push the claw to rotate out of the driving slot and the locking slot, such that the claw unlocks the main shaft to rotate; when the transmission disc is idling reversely, the claw is reset and snapped into the driving slot and the locking slot so as to lock the main shaft from rotation, thereby preventing rotation of the main shaft.

The claw is provided with a torsion spring configured to drive the claw to reset; and after the claw is reset, the claw is snapped into the driving slot and the locking slot. With such a configuration, resilience of the torsion spring enables the claw to rotate to be automatically reset, thereby locking the main shaft from rotation. The present disclosure features a simple structure and easy assembly.

A transmission post is provided on the transmission disc, and an arc-shaped transmitting groove is provided coaxially on the main shaft, wherein the transmission post is inserted in the arc-shaped transmitting groove, such that when the transmission disc drives the transmission post to move from a middle portion of the arc-shaped transmitting groove to an end portion of the arc-shaped transmitting groove, the claw is released out of the driving slot and the locking slot. With such a configuration, when the transmission disc is driving the transmission post to move from the middle portion of the arc-shaped transmitting groove to an end portion of the arc-shaped transmitting groove, idling of the transmission disc may be realized, at which point the main shaft does not rotate; when the transmission post moves to the end portion of the arc-shaped transmitting groove, the claw unlocks the main shaft to rotate, at which point the main shaft may rotate, whereby to continuously drive the transmission disc to rotate, enabling the transmission post to drive the main shaft to rotate, further realizing switching of the hitch between the folded position and the unfolded position; when the transmission post is moving from the end portion of the arc-shaped transmitting groove to the middle portion of the arc-shaped transmitting groove, the transmission disc is idling, at which point the main shaft does not rotate; when the transmission post moves to the middle portion of the arc-shaped transmitting groove, the claw locks the main shaft from rotation.

The body further comprises a connecting plate, the connecting plate being secured to the vehicle body, the fixed sleeve and the main shaft passing through the connecting plate; and a sealing disc is provided between the hitch and the connecting plate. This configuration may avoid dirt accumulation between the hitch and the connecting plate.

The hitch has a limit slot, and the main shaft is provided with a limit shoulder surface, wherein the end face of the fixed sleeve and the limit shoulder surface abut against a bottom surface of the limit slot, respectively, and an outer peripheral side of the fixed sleeve is fitted with a sidewall of the limit slot. Such a configuration enables radial limitation to the hitch via the fixed sleeve, and upon assembly, the hitch is axially pressed onto the end face of the fixed sleeve and the limit shoulder surface so as to unidirectionally axially limit the hitch.

One end of the main shaft is connected with a nut which press-fits the hitch onto the limit shoulder surface, and a protective hood for occluding the main shaft is provided to cover the outer side of the nut, the protective hood being securely connected with the hitch via bolts. With such a configuration, the hitch is axially limited by the nut, the end face of the fixed sleeve, and the limit shoulder surface, which avoids axial play of the hitch; further, providing of the protective hood also avoids exposure of the nut and the main shaft, which enhances aesthetic appearance of the product.

These characteristics and advantages of the present disclosure will be disclosed in detail in the detailed description and the accompanying drawings below.

### BRIEF DESCRIPTION OF THE DRAWINGS

Hereinafter, the present disclosure will be described in further detail with reference to the accompanying drawings:
Fig. 1 is an exploded structural view of a trailer hitch coupler according to a first embodiment of the present disclosure;
Fig. 2 is a sectional view of the trailer hitch coupler mounted to a vehicle body in the first embodiment of the present disclosure;
Fig. 3 is a status diagram when a resilient assembly is inserted in a positioning groove in the first embodiment of the present disclosure;
Fig. 4 is a structural schematic view of a transmission disc and a main shaft in the first embodiment of the present disclosure;
Fig. 5 is a status diagram when a locking member is snapped into a driving slot in the first embodiment of the present disclosure;
Fig. 6 is a status diagram when the locking member is snapped into a locking slot in the first embodiment of the present disclosure;
Fig. 7 is a sectional view when the locking member is snapped into the driving slot and the locking slot in the first embodiment of the present disclosure;

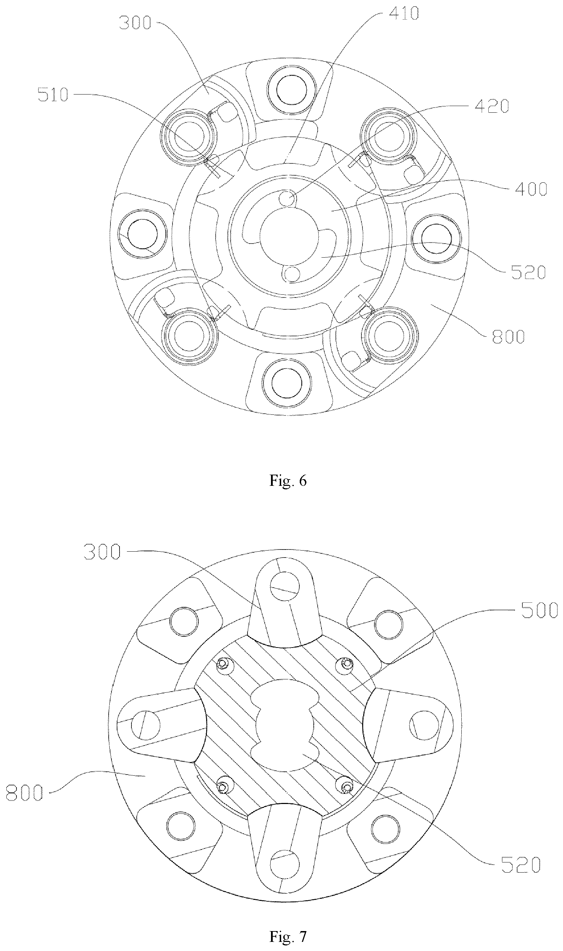

Fig. 7 is a sectional view when the locking member is snapped into the driving slot and the locking slot in the first embodiment of the present disclosure;

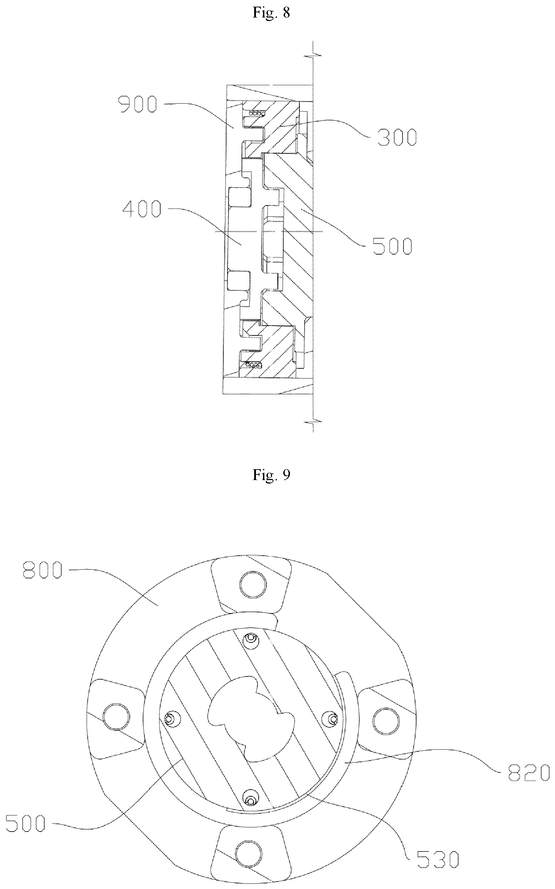

Fig. 8 is a status diagram when the locking member is released out of the driving slot and the locking slot in the first embodiment of the present disclosure;
Fig. 9 is a sectional view of fitting between the fixed sleeve and the main shaft in the first embodiment of the present disclosure;

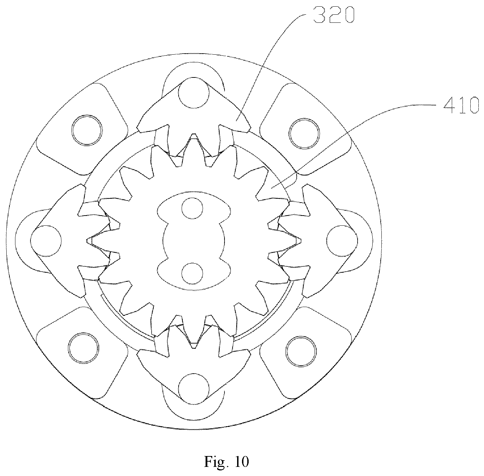

Fig. 10 is a status diagram when the locking member locks the main shaft from rotation in a second embodiment of the present disclosure.

### Reference Numerals:

100. hitch; 200. driving shaft; 300. locking member; 310. torsion spring; 320. tooth; 400. transmission disc; 410. driving slot; 420. transmission post; 500. main shaft; 501. mounting groove; 510. locking slot; 520. arc-shaped transmitting groove; 530. limit boss; 540. resilient assembly; 541. resilient member; 542. positioning member; 600. connecting plate; 700: housing; 800: fixed sleeve; 810: pin; 820: arc-shaped limit slot; 830. positioning groove; 900: cover plate; 1000. motor assembly.

### DETAILED DESCRIPTION

Embodiments of the present disclosure provide a trailer hitch coupler, comprising: a body secured to a vehicle body and a hitch, wherein the body comprises a main shaft and a fixed sleeve fixed relative to the vehicle body, the fixed sleeve being arranged to sleeve outside the main shaft, one end of the main shaft extending out of the fixed sleeve so as to be connected and rotate synchronously with the hitch; wherein the main shaft rotates to shift the hitch between a folded position and a unfolded position; one of the main shaft and the fixed sleeve is provided with a positioning groove, and the other one of the main shaft and the fixed sleeve is provided with a resilient assembly, such that when the hitch is disposed at the folded or unfolded position, the resilient assembly is inserted in the positioning groove so as to circumferentially position the main shaft.

According to the present disclosure, when the hitch is disposed at the folded or unfolded position, the resilient assembly is inserted in the positioning groove so as to circumferentially position the main shaft, which prevents the main shaft from rotation; since the hitch is connected and rotates synchronously with the main shaft, sway of the hitch may be avoided by preventing rotation of the main shaft, which further enhances hitching performance of the trailer hitch coupler.

Hereinafter, the technical solutions of the embodiments the present disclosure will be explained and illustrated through with reference to the accompanying drawings. However, the embodiments are only preferred embodiments of the present disclosure, not all of them. All other embodiments derived by those skilled in the art without exercise of inventive work based on the examples in the embodiments fall within the protection scope of the present disclosure.

### First Embodiment

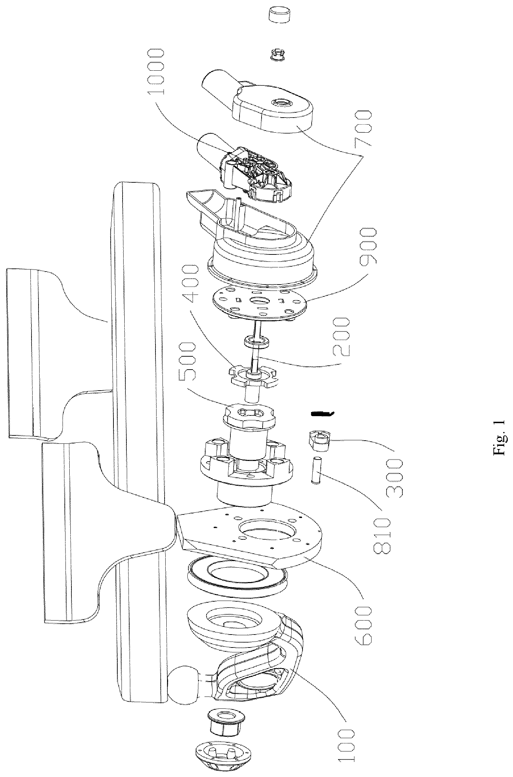

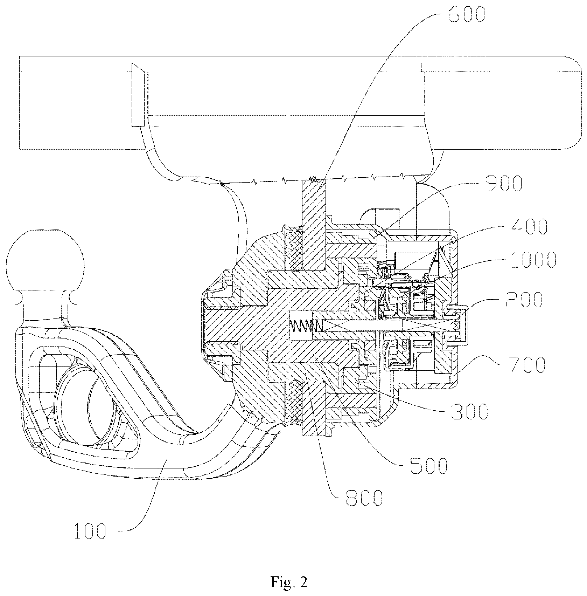

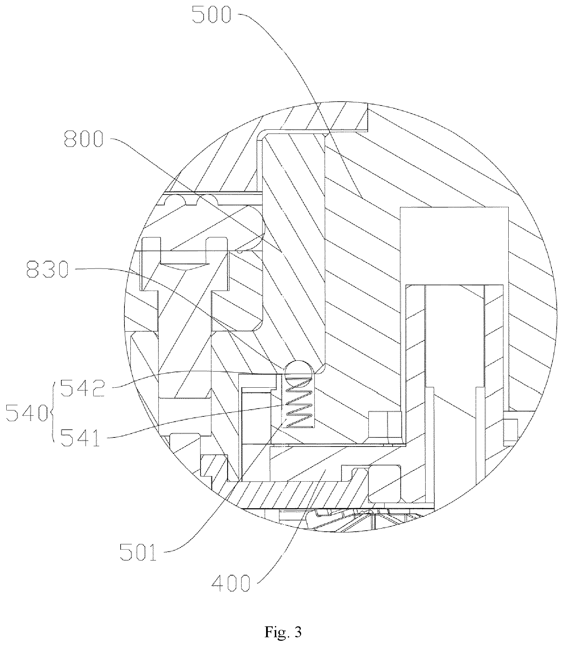

Referring to Figs. 1 to 3, a trailer hitch coupler in this embodiment comprises a body secure to a vehicle body and a hitch 100, wherein the body comprises a main shaft 500 and a fixed sleeve 800 fixed relative to the vehicle body, the fixed sleeve 800 being arranged to sleeve outside the main shaft 500, one end of the main shaft 500 extending out of the fixed sleeve 800 so as to be connected with the hitch 100; a portion, which is connected with the hitch 100, of the main shaft 500 has a non-circular face fitted with a non-circular hole in the hitch 100, whereby realizing that the main shaft 500 drives the hitch 100 to rotate synchronously; wherein the main shaft 500 rotates to shift the hitch 100 between a folded position and an unfolded position; one end of the main shaft 500 extends radially outwardly to form a circular ring; a resilient assembly 540 is provided at one side, which faces the fixed sleeve 800, of the circular ring; two positioning grooves 830 are provided on the fixed sleeve 800; wherein when the hitch 100 is disposed at the folded position, the resilient assembly 540 is inserted in one of the positioning grooves 830 to circumferentially position the main shaft 500; and when the hitch 100 is disposed at the unfolded position, the resilient assembly 540 is inserted in the other positioning groove 830 to circumferentially position the main shaft 500. In this way, rotation of the main shaft 500 is prevented irrespective of whether the hitch 100 is disposed at the folded position or the unfolded position. Since the hitch 100 is connected and rotates synchronously with the main shaft 500, sway of the hitch 100 is avoided by preventing rotation of the main shaft 500, which further enhances hitching performance of the trailer hitch coupler.

In this embodiment, one side, which faces the fixed sleeve 800, of the circular ring is further provided with a mounting groove 501 extending axially along the main shaft 500; the resilient assembly 540 comprises a resilient member 541 and a positioning member 542, wherein the resilient member 541 is preferably a spring; one end of the resilient member 541 is inserted in the mounting groove 501, and the other end of the resilient member 541 is connected with the positioning member 542. When the hitch 100 is disposed at the folded or unfolded position, the positioning member 542 is pushed by the resilient member 541 into the positioning groove 830 so as to circumferentially position the main shaft 500; meanwhile, the positioning member 542 may be released out of the positioning groove 830 by compressing the resilient member 541 such that the main shaft 500 may rotate to shift the hitch 100 between the folded position and the unfolded position, which simplifies the overall structure and facilitates assembly.

To enable the hitch 100 to shift between the folded position and the unfolded position, the positioning groove 830 in this embodiment is an arc-shaped groove, and the positioning member 542 is a steel ball. In this way, when the main shaft 500 is rotated to shift the hitch 100 between the folded position and the unfolded position, the positioning member 542 may easily slide out of the positioning groove 830, thereby avoiding occurrence of jamming from deadlocking the main shaft 500. Of course, in an alternative embodiment, the positioning member may also be a positioning pin, one end of which that is inserted in the positioning groove has a spherical surface.

It is understood that in another embodiment of the present disclosure, the positioning groove is provided at a side, which faces the fixed sleeve, of the circular ring, wherein the resilient assembly and the mounting groove are provided on the fixed sleeve. Such a configuration may also circumferentially position the main shaft by inserting the resilient assembly in the positioning groove, which ensures no sway of the hitch in the folded or unfolded position.

To further enhance the circumferential positioning effect of the main shaft 500 when the hitch 100 is disposed at the folded or unfolded position so as to further prevent sway of the hitch 100, the body in this embodiment further comprises: a driving shaft 200, a locking member 300, and a transmission disc 400, wherein the locking member 300 is rotatably mounted on an end face, where the positioning groove 830 is provided, of the fixed sleeve 800; the driving shaft 200 drives the transmission disc 400 to idle such that the locking member 300 unlocks the main shaft 500 to rotate or locks the main shaft 500 from rotation; wherein when the locking member 300 unlocks the main shaft 500 to rotate, the driving shaft 200 drives, via the transmission disc 400, the main shaft 500 to rotate so as to shift the hitch 100 between the folded position and the unfolded position; when the hitch 100 is disposed at the folded or unfolded position, the locking member 300 locks the main shaft 500 from rotation, whereby further locking the main shaft 500 via the locking member 300, which further enhances circumferential positioning effect of the main shaft 500 and further avoids sway of the hitch 100. Additionally, the fixed sleeve 800 provides a carrier for mounting the locking member 300, which further simplifies body structure.

Specifically, the body in this embodiment further comprises: a connecting plate 600 secured to an anti-collision beam, and a housing 700 snap-fitted to one side of the connecting plate 600; wherein one end of the fixed sleeve 800 is disposed in the housing 700 and the other end of the fixed sleeve 800 passes through the connecting plate 600, both of the fixed sleeve 800 and the housing 700 being secured to the connecting plate 600 via bolts; wherein the fixed sleeve 800 sleeves outside the main shaft 500 so as to radially position the main shaft 500, which ensures coaxiality between the main shaft 500 and the transmission disc 400; wherein one end of the main shaft 500 is disposed in the housing 700, and the other end thereof extends out of the fixed sleeve 800 so as to be connected and rotate synchronously with the hitch 100, a sealing disc being provided between the hitch 100 and the connecting plate 600 so as to prevent dirt accumulation in the gap between the hitch 100 and the connecting plate 600; a cover plate 900 is further securely provided in the housing 700, wherein the transmission disc 400 is movably connected on the cover plate 900 via a plane bearing; the driving shaft 200, after passing through the cover plate 900 and the plane bearing, is in transmission connection with the transmission disc 400, i.e., the portion, which is fitted with the non-circular hole in the transmission disc 400, of the driving shaft 200 is a non-circular plane. Such a configuration enables the driving shaft 200 to drive the transmission disc 400 to rotate synchronously.

A limit slot is further provided at the side of the hitch 100 facing the connecting plate 600, and the main shaft 500 is provided with a limit shoulder surface, wherein the end face of the fixed sleeve 800 and the limit shoulder surface abut against a bottom surface of the limit slot, respectively, and an outer peripheral side of the fixed sleeve 800 is fitted with a sidewall of the limit slot. With such a configuration, the hitch 100 may be radially limited by the fixed sleeve 800, and upon assembly, the hitch 100 is axially pressed against the end face of the fixed sleeve 800 and the limit shoulder surface so as limit the hitch 100 unidirectionally.

The end of the main shaft 500 extending out of the fixed sleeve 800 is further attached with a nut which press-fits the hitch 100 onto the limit shoulder surface, and a protective hood for occluding the main shaft 500 is provided to cover an outer side of the nut, the protective hood being securely connected with the hitch 100 via bolts. With such a configuration, the hitch 100 is axially limited by the nut, the end face of the fixed sleeve 800, and the limit shoulder surface, which avoids axial play of the hitch 100; further, providing of the protective hood also avoids exposure of the nut and the main shaft 500, which enhances aesthetic appearance of the product.

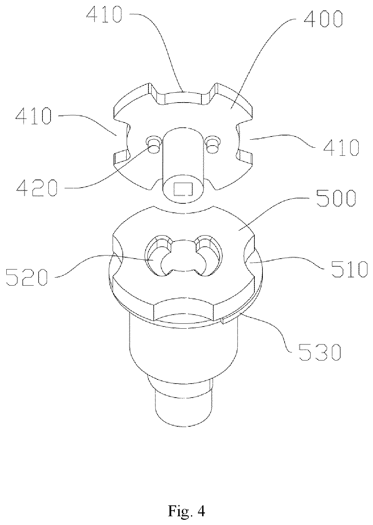

As illustrated in Figs. 1 to 8, the locking member 300 refers to a claw rotatably mounted on the fixed sleeve 800, wherein the claw is a sectorial plate. A pin 810 is provided on an end face, which is disposed in the housing 700, of the fixed sleeve 800, and the claw is rotatably mounted on the pin 810. A torsion spring 310 sleeves over the claw, one end of the torsion spring 310 being secured on the fixed sleeve 800 or the cover plate 900, the other end of the torsion spring 310 being secured to a bump on the claw, such that the claw may be driven to reset by resilience of the torsion spring 310. In this embodiment, a driving slot 410 is further provided at the outer peripheral side of the transmission disc 400, the driving slot 410 being a trapezoidal slot, wherein an opening of the trapezoidal slot is gradually enlarged radially outwardly. The outer peripheral side of the circular ring formed by radial, outward extension of the main shaft 500 is provided with a locking slot 510, the locking slot 510 being an arc-shaped slot, wherein the arc-shaped slot matches the arc-shaped surface of the sectorial plate. When the driving shaft 200 actuates the transmission disc 400 to idle, a slot wall of the driving slot 410 is driven to push the claw to rotate out of the driving slot 410 and the locking slot 510, such that the claw unlocks the main shaft 500 so that the main shaft 500 may rotate. When the driving shaft 200 actuates the transmission disc 400 to idle reversely, the claw is automatically reset and snapped into the driving slot 410 and the locking slot 510 under resilience of the torsion spring 310 so as to lock the main shaft 500 from rotation. Additionally, when the main shaft 500 is locked, no force is transmitted between the claw and the driving slot 410 such that in the locked status, the main shaft 500 is disengaged from the transmission disc 400, further avoiding the driving shaft 200 from being stressed all the time, which further extends service life of the driving shaft 200. Particularly when the driving shaft 200 actuates a rotation via a motor assembly, this configuration may also extend service life of the motor assembly. Furthermore, in this embodiment, by configuring the driving slot 410 as a trapezoidal slot, the transmission disc 400 may smoothly actuate the claw to rotate to be released out of the locking slot 510; while by configuring the locking slot 510 to match the arc-shaped surface of the sectorial plate, the effect of locking between the claw and the locking slot 510 may be enhanced in the locked status.

To realize idling of the transmission disc 400 relative to the main shaft 500, a transmission post 420 extending axially is provided on a disc face of the transmission disc 400, and an arc-shaped transmitting groove 520 is provided coaxially on the main shaft 500, the transmission post 420 being inserted in the arc-shaped transmitting groove 520. In a status where the claw locks the main shaft 500, the transmission post 420 is disposed at the middle portion of the arc-shaped transmitting groove 520. When the driving shaft 200 actuates the transmission disc 400 to rotate such that the transmission disc 400 drives the transmission post 420 to move from the middle portion of the arc-shaped transmitting groove 520 to an end portion of the arc-shaped transmitting groove 520, the claw is released out of the driving slot 410 and the locking slot 510, thereby unlocking the main shaft 500 to rotate; when the transmission post 420 is moving from the middle portion of the arc-shaped transmitting groove 520 to an end portion of the arc-shaped transmitting groove 520, since the transmission post 420 is sliding in the arc-shaped transmitting groove 520, no torsion is applied to the main shaft 500, and the transmission disc 400 rotates but the main shaft 500 does not rotate, thereby realizing idling of the transmission disc 400. After the claw unlocks the main shaft 500 to rotate to continuously actuate the transmission disc 400 to rotate, the transmission post 420 pushes a sidewall of the arc-shaped transmitting groove 520 to actuate the main shaft 500 to rotate, which realizes shifting of the hitch 100 between the folded position and the unfolded position, and then the driving shaft 200 actuates the transmission disc 400 to rotate reversely such that when the transmission post 420 is moving from the end portion of the arc-shaped transmitting groove to the middle portion of the arc-shaped transmitting groove, the main shaft 500 does not rotate so as to hold the hitch 100 at the corresponding folded or unfolded position; when the transmission post 420 moves to the middle portion of the arc-shaped transmitting groove 520, the claw is reset and snapped into the driving slot 410 and the locking slot 510 to thereby lock the main shaft 500 from rotation.

To enable the transmission disc 400 to actuate the main shaft 500 to rotate stably, in this embodiment, two transmission posts 420 are symmetrically arranged about the center of the disc face of the transmission disc 400, and correspondingly, two arc-shaped transmitting grooves 520 are provided on the main shaft 500. Such a configuration not only ensures stable rotation of the main shaft 500, but also ensures the size of the claw, thereby ensuring the effect of locking the main shaft 500.

To enhance the effect of locking the main shaft 500 and further prevent sway of the hitch 100 caused by the rotation of the main shaft 500, in this embodiment, a plurality of driving slots 410 are arranged circumferentially at uniform intervals around the outer periphery of the transmission disc 400; and a plurality of locking slots 510 in one-to-one correspondence with the driving slots 410 are provided on the main shaft 500, wherein the number of the claws are identical to that of the driving slots 410. In this embodiment, the number of the driving slots 410, the number of the locking slots 510, and the number of the claws are preferably 4. With such a configuration, the effect of locking the main shaft 500 may be enhanced by one-to-one locking fit between the plurality of claws and the plurality of locking slots 510, whereby further preventing sway of the hitch 100 due to the rotation of the main shaft 500.

It is understood that in another embodiment of the present disclosure, the arc-shaped transmitting groove may be alternatively provided on the disc face of the transmission disc, while the transmission post is provided on the main shaft, the transmission post being inserted in the arc-shaped transmitting groove. As such, when the locking member locks the main shaft from rotation, the transmission post is disposed at the middle portion of the arc-shaped transmitting groove; while when the locking member unlocks the main shaft to rotate, the transmission post abuts an end portion of the arc-shaped transmitting groove.

To better understand the technical solution of the present disclosure, the operating principle of the trailer hitch coupler in this embodiment is illustrated below:

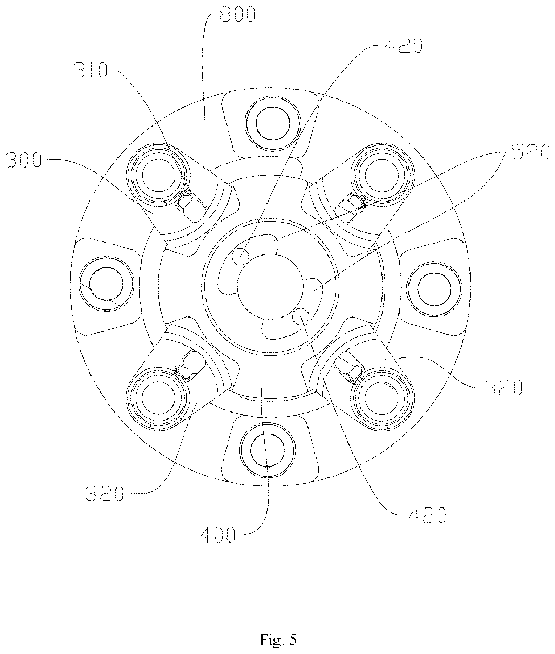

As illustrated in Fig. 5, the locking member 300 locks the main shaft 500 from rotation, at which point the hitch 100 is disposed at the folded position, the resilient assembly 540 is inserted in one of the positioning grooves 830, and the driving shaft 200 actuates the transmission disc 400 to idle clockwise. When the transmission post 420 is moving from the middle portion of the arc-shaped transmitting groove 520 to the right end portion of the arc-shaped transmitting groove 520, a slot wall of the driving slot 410 is driven to push the claw to rotate out of the locking slot 510; after the transmission post 420 moves to the right end portion of the arc-shaped transmitting groove 520, the claw is released out of the driving slot 410 and the locking slot 510 (as illustrated in Fig. 6), thereby unlocking the main shaft 500 to rotate; the driving shaft 200 continuously actuates the transmission disc 400 to rotate clockwise, at which point the main shaft 500, actuated by the transmission post 420, drives the hitch 100 to rotate synchronously, and the resilient assembly 540 slides out of the positioning groove 830; when the hitch 100 rotates to the unfolded position, the resilient assembly 540 is inserted in the other positioning groove 830 so as to circumferentially position the main shaft 500; afterwards, the driving shaft 200 actuates the transmission disc 400 to idle reversely (i.e., counterclockwise); when the transmission post 420 is moving from the right end portion of the arc-shaped transmitting groove 520 to the middle portion of the arc-shaped transmitting groove 520, the main shaft 500 does not rotate under the fitting between the resilient assembly 540 and the positioning groove 830, so as to maintain the hitch 100 precisely at the unfolded position; after the transmission post 420 moves to the middle portion of the arc-shaped transmitting groove 520, the driving slot 410 corresponds to the locking slot 510, such that the claw is reset and snapped into the driving slot 410 and the locking slot 510 under resilience of the torsion spring 310, thereby further locking the main shaft 500 from rotation, which enhances circumferential positioning effect of the main shaft 500 and further prevents sway of the hitch 100 at the unfolded position.

Likewise, when it is needed to shift the hitch 100 from the unfolded position to the folded position the driving shaft 200 actuates the transmission disc 400 to idle counterclockwise; when the transmission post 420 is moving from the middle portion of the arc-shaped transmitting groove 520 to the left end portion of the arc-shaped transmitting groove 520, the slot wall of the driving slot 410 is driven to push the claw to rotate out of the locking slot 510; after the transmission post 420 moves to the end portion of the arc-shaped transmitting groove 520, the claw is released out of the driving slot 410 and the locking slot 510, thereby unlocking the main shaft 500 to rotate; the driving shaft 200 continuously actuates the transmission disc 400 to rotate counterclockwise, at which point the main shaft 500, actuated by the transmission post 420, drives the hitch 100 to rotate synchronously, and the resilient assembly 540 slides out of the other positioning groove 830; when the hitch 100 rotates to the folded position, the resilient assembly 540 is inserted in one of the positioning groove 830 so as to circumferentially position the main shaft 500; afterwards, the driving shaft 200 actuates the transmission disc 400 to idle reversely (i.e., clockwise); when the transmission post 420 is moving from the left end portion of the arc-shaped transmitting groove 520 to the middle portion of the arc-shaped transmitting groove 520, the main shaft 500 does not rotate under the fitting between the resilient assembly 540 and the positioning groove 830 so as to maintain the hitch 100 precisely at the folded position; after the transmission post 420 moves to the middle portion of the arc-shaped transmitting groove 520, the driving slot 410 corresponds to the locking slot 510, such that the claw is reset and snapped into the driving slot 410 and the locking slot 510 under resilience of the torsion spring 310, thereby locking the main shaft 500 from rotation, which enhances the circumferential positioning effect with respect to the main shaft 500 and further prevents sway of the hitch 100 at the folded position.

To ensure an exact one-to-one correspondence between the driving slots 410 and the locking slots 510 after reverse idling of the transmission disc 400 so as to snap the claws into the driving slots 410 and the locking slots 510, it is needed to limit a desired rotating angle of the main shaft 500 when the hitch 100 shifts between the folded position and the unfolded position. To ensure accuracy of limiting the rotating angle, as illustrated in the embodiment shown in Fig. 9, an arc-shaped limit slot 820 is provided at the inner peripheral side of the fixed sleeve 800, and a limit boss 530 is provided at the outer peripheral side of the main shaft 500 fitted with the fixed sleeve 800, wherein the limit boss 530 moves between two ends of the arc-shaped limit slot 820, thereby limiting the rotating angle of the main shaft 500 by limiting the rotating angle of the limit boss 530, which defines an initial position and an end position of the main shaft 500, further ensuring the effect of locking the hitch 100 at the folded and unfolded positions.

It is understood that in alternative embodiments of the present disclosure, the arc-shaped limit slot may also be provided at the outer peripheral side of the main shaft, while the limit boss projects from the inner peripheral side of the fixed sleeve.

Finally, to enhance user experience of the product, in this embodiment, a motor assembly 1000 is further provided in the housing 700, wherein the driving shaft 200 is disposed in the housing 700 and connected with an output bushing of the motor assembly 1000, wherein the motor assembly 1000 actuates the driving shaft 200 to rotate to shift the hitch 100 between the folded position and the unfolded position. The whole process does not need a user to manually actuate rotation of the driving shaft 200, thereby enhancing use experience of the product.

### Second Embodiment

As illustrated in Fig. 10, the second embodiment differs from the first embodiment in that teeth 320 are provided on an arc-shaped surface of the claw, and a toothed groove engaged with the teeth is provided at the outer peripheral side of the transmission disc 400, the transmission disc 400 being preferably a gearwheel, the toothed groove forming a driving slot 410. Such a configuration may also realize pushing the claw out of the locking slot 510 via the slot wall of the driving slot 410.

### Third Embodiment

This embodiment differs from the first to second embodiments in that no motor assembly is provided in the housing 700; in this case, one end of the driving shaft 200 extends out of the housing 700, such that the driving shaft 200 may also be actuated to rotate to shift the hitch 100 between the folded position and the unfolded position when the user rotates the end of the driving shaft 200 extending out of the housing 700 by a wrench or by bare hands, thereby reducing manufacturing cost of the product; further, without the motor assembly, failure of the product due to electric fault may be avoided.

### Fourth Embodiment:

Different from the first to third embodiments of the present disclosure, no locking member, transmission disc, driving shaft, and cover plate are provided in this embodiment, wherein the end of the main shaft distal from the hitch is directly connected with the motor assembly; or, the end of the main shaft distal from the hitch extends out of the housing for the user to manually actuate rotation of the main shaft. Such a configuration renders a simple structure and a low manufacturing cost.

What have been described above are only embodiments of the present disclosure; however, the protection scope of the present disclosure is not limited thereto. A person skilled in the art should understand that the present disclosure includes, but is not limited to, the contents described in the drawings and the detailed description.

## Claims

1. A trailer hitch coupler comprising a body secured to a vehicle body and a hitch (100), said body comprising a main shaft (500) and a fixed sleeve (800) which is fixed relative to the vehicle body and arranged to sleeve outside the main shaft (500), said the main shaft (500) having one end extending out of the fixed sleeve (800) so as to be connected to and synchronously rotate with the hitch (100), wherein the main shaft (500) rotates to shift the hitch (100) between a folded position and an unfolded position, and wherein one of the main shaft (500) and the fixed sleeve (800) is provided with a positioning groove (830), and the other one of the main shaft (500) and the fixed sleeve (800) is provided with a resilient assembly (540), such that when the hitch (100) is disposed in the folded or unfolded position, the resilient assembly (540) is inserted in the positioning groove (830) so as to circumferentially position the main shaft (500), wherein the body further comprises a driving shaft (200), a locking member (300), and a transmission disc (400), wherein the locking member (300) is rotatably mounted at an end face of the fixed sleeve (800), the driving shaft (200) drives the transmission disc (400) to idle such that the locking member (300) unlocks the main shaft (500) to rotate or locks the main shaft (500) from rotation, wherein when the locking member (300) unlocks the main shaft (500) to rotate, the driving shaft (200) drives, via the transmission disc (400), the main shaft (500) to rotate, and wherein when the hitch (100) is disposed at the folded or unfolded position, the locking member (300) locks the main shaft (500) from rotation, **characterized in that** the locking member (300) refers to a claw, a driving slot (410) is provided on the transmission disc (400), and a locking slot (510) is provided on the main shaft (500), such that when the claw is snapped into the driving slot (410) and the locking slot (510), the claw locks the main shaft (500) from rotation; and when the transmission disc (400) rotates to release the claw out of the driving slot (410) and the locking slot (510), the claw unlocks the main shaft (500) to rotate.

2. A trailer hitch coupler according to claim 1, wherein the main shaft (500) or the fixed sleeve (800) is provided with a mounting groove (501), wherein the resilient assembly (540) comprises a resilient member (541) and a positioning member (542), and wherein one end of the resilient member (541) is inserted in the mounting groove (501) and the other end of the resilient member (541) is connected with the positioning member (542), the positioning member (542) being pushed by the resilient member (541) to be inserted in the positioning groove (830).

3. A trailer hitch coupler according to claim 2, wherein the positioning groove (830) refers to an arc-shaped groove, the positioning member (542) refers to a steel ball or a positioning pin one end of which has a spherical surface and is inserted in the positioning groove (830).

4. A trailer hitch coupler according to claim 1, wherein the claw is provided with a torsion spring (310) configured to drive the claw to reset; and when the claw is reset, the claw is snapped into the driving slot (410) and the locking slot (510).

5. A trailer hitch coupler according to claim 1, wherein a transmission post (420) is provided on the transmission disc (400), and an arc-shaped transmitting groove (520) is provided coaxially on the main shaft (500), wherein the transmission post (420) is inserted into the arc-shaped transmitting groove (520), such that when the transmission disc (400) drives the transmission post (420) to move from a middle portion of the arc-shaped transmitting groove (520) to an end portion of the arc-shaped transmitting groove (520), the claw is released out of the driving slot (410) and the locking slot (510).

6. A trailer hitch coupler according to any one of claims 1 to 5, wherein the body further comprises a connecting plate (600), the connecting plate (600) being secured to the vehicle body, the fixed sleeve (800) and the main shaft (500) passing through the connecting plate (600); and a sealing disc is provided between the hitch (100) and the connecting plate (600).

7. A trailer hitch coupler according to claim 6, wherein the hitch (100) has a limit slot, and the main shaft (500) is provided with a limit shoulder surface, wherein the end face of the fixed sleeve (800) and the limit shoulder surface abut against a bottom surface of the limit slot, respectively, and an outer peripheral side of the fixed sleeve (800) is fitted with a sidewall of the limit slot.

8. A trailer hitch coupler according to claim 7, wherein one end of the main shaft (500) is connected with a nut which press-fits the hitch (100) onto the limit shoulder surface, and a protective hood for occluding the main shaft (500) is provided to cover an outer side of the nut, the protective hood being securely connected with the hitch (100) via bolts.

## Patentansprüche

1. Anhängerkupplung, bestehend aus einem an einer Fahrzeugkarosserie befestigten Körper und einer Kupplung (100), wobei der Körper eine Hauptwelle (500) und eine feste Hülse (800) umfasst, die relativ zur Fahrzeugkarosserie fixiert und so angeordnet ist, dass sie die Hauptwelle (500) umhüllt, wobei die Hauptwelle (500) ein Ende aufweist, das aus der festen Hülse (800) herausragt, um mit der Kupplung (100) verbunden zu sein und sich synchron mit dieser zu drehen, wobei sich die Hauptwelle (500) dreht, um die Kupplung (100) zwischen einer eingeklappten Position und einer ausgeklappten Position zu verschieben, und wobei entweder die Hauptwelle (500) oder die feste Hülse (800) mit einer Positionierungsnut (830) versehen ist, und das andere Teil, die Hauptwelle (500) oder die feste Hülse (800), mit einer elastischen Baugruppe (540) versehen ist, so dass, wenn die Kupplung (100) in der zusammengeklappten oder auseinandergeklappten Position angeordnet ist, die elastische Baugruppe (540) in die Positionierungsnut (830) eingeführt wird, um die Hauptwelle (500) in Umfangsrichtung zu positionieren, wobei
der Körper ferner eine Antriebswelle (200), ein Verriegelungselement (300) und eine Übertragungsscheibe (400) umfasst, wobei das Verriegelungselement (300) drehbar an einer Stirnfläche der feststehenden Hülse (800) angebracht ist, wobei die Antriebswelle (200) die Übertragungsscheibe (400) in Leerlauf dreht, so dass das Verriegelungselement (300) die Hauptwelle (500) zur Drehung entriegelt oder die Hauptwelle (500) gegen Drehung verriegelt, wobei, wenn das Verriegelungselement (300) die Hauptwelle (500) zur Drehung entriegelt, die Antriebswelle (200) über die Übertragungsscheibe (400) die Hauptwelle (500) in Drehung versetzt, und wobei, wenn die Kupplung (100) in der eingeklappten oder ausgeklappten Position angeordnet ist, das Verriegelungselement (300) die Hauptwelle (500) gegen Drehung verriegelt,
**dadurch gekennzeichnet, dass**
das Verriegelungselement (300) eine Klaue ist, ein Antriebsschlitz (410) an der Übertragungsscheibe (400) vorgesehen ist, und ein Verriegelungsschlitz (510) an der Hauptwelle (500) vorgesehen ist, so dass, wenn die Klaue in den Antriebsschlitz (410) und den Verriegelungsschlitz (510) einrastet, die Klaue die Hauptwelle (500) gegen Drehung sperrt; und wenn sich die Übertragungsscheibe (400) dreht, um die Klaue aus dem Antriebsschlitz (410) und dem Verriegelungsschlitz (510) zu lösen, die Klaue die Hauptwelle (500) zur Drehung entriegelt.

2. Anhängerkupplung nach Anspruch 1, wobei die Hauptwelle (500) oder die feste Hülse (800) mit einer Befestigungsnut (501) versehen ist, wobei die elastische Baugruppe (540) ein elastisches Element (541) und ein Positionierungselement (542) umfasst, und wobei ein Ende des elastischen Elements (541) in die Befestigungsnut (501) eingeführt ist und das andere Ende des elastischen Elements (541) mit dem Positionierungselement (542) verbunden ist, wobei das Positionierungselement (542) durch das elastische Element (541) gedrückt wird, um in die Positionierungsnut (830) eingeführt zu werden.

3. Anhängerkupplung nach Anspruch 2, wobei die Positionierungsnut (830) eine bogenförmige Nut bezeichnet, das Positionierungselement (542) eine Stahlkugel oder einen Positionierungsstift bezeichnet, dessen eines Ende eine kugelförmige Oberfläche aufweist und in die Positionierungsnut (830) eingesetzt ist.

4. Anhängerkupplung nach Anspruch 1, wobei die Klaue mit einer Torsionsfeder (310) versehen ist, die so konfiguriert ist, dass sie die Klaue zum Zurücksetzen antreibt; und wenn die Klaue zurückgesetzt wird, rastet die Klaue in den Antriebsschlitz (410) und den Verriegelungsschlitz (510) ein.

5. Anhängerkupplung nach Anspruch 1, wobei ein Übertragungszapfen (420) an der Übertragungsscheibe (400) vorgesehen ist und eine bogenförmige Übertragungsnut (520) koaxial an der Hauptwelle (500) vorgesehen ist, wobei der Übertragungszapfen (420) in die bogenförmige Übertragungsnut (520) eingeführt ist, sodass, wenn die Übertragungsscheibe (400) den Übertragungszapfen (420) antreibt, um sich von einem mittleren Abschnitt der bogenförmigen Übertragungsnut (520) zu einem Endabschnitt der bogenförmigen Übertragungsnut (520) zu bewegen, die Klaue aus dem Antriebsschlitz (410) und dem Verriegelungsschlitz (510) gelöst wird.

6. Anhängerkupplung nach einem der Ansprüche 1 bis 5, wobei der Körper ferner eine Verbindungsplatte (600) umfasst, wobei die Verbindungsplatte (600) an der Fahrzeugkarosserie befestigt ist, wobei die feste Hülse (800) und die Hauptwelle (500) durch die Verbindungsplatte (600) hindurchgehen; und wobei eine Dichtungsscheibe zwischen der Kupplung (100) und der Verbindungsplatte (600) vorgesehen ist.

7. Anhängerkupplung nach Anspruch 6, wobei die Kupplung (100) einen Begrenzungsschlitz aufweist und die Hauptwelle (500) mit einer Begrenzungsanschlagfläche versehen ist, wobei die Stirnfläche der feststehenden Hülse (800) und die Begrenzungsanschlagfläche jeweils an einer Bodenfläche des Begrenzungsschlitzes anliegen und eine Außenumfangsseite der feststehenden Hülse (800) an einer Seitenwand des Begrenzungsschlitzes anliegt.

8. Anhängerkupplung nach Anspruch 7, wobei ein Ende der Hauptwelle (500) mit einer Mutter verbunden ist, die die Kupplung (100) auf die Begrenzungsfläche drückt, und eine Schutzhaube zum Abdecken der Hauptwelle (500) vorgesehen ist, um eine Außenseite der Mutter abzudecken, wobei die Schutzhaube über Bolzen fest mit der Kupplung (100) verbunden ist.

## Revendications

1. Coupleur d'attelage de remorque comprenant un corps fixé à la carrosserie d'un véhicule et un attelage (100), ledit corps comprenant un arbre principal (500) et un manchon fixe (800) qui est fixe par rapport à la carrosserie du véhicule et disposé pour s'emmancher à l'extérieur de l'arbre principal (500), ledit arbre principal (500) ayant une extrémité s'étendant hors du manchon fixe (800) de manière à être relié à l'attelage (100) et à tourner de manière synchronisée avec celui-ci, dans lequel l'arbre principal (500) tourne pour déplacer l'attelage (100) entre une position repliée et une position dépliée, et dans lequel l'un de l'arbre principal (500) et du manchon fixe (800) est pourvu d'une rainure de positionnement (830), et l'autre de l'arbre principal (500) et du manchon fixe (800) est pourvu d'un ensemble élastique (540), de sorte que lorsque l'attelage (100) est disposé dans la position pliée ou dépliée, l'ensemble élastique (540) est inséré dans la rainure de positionnement (830) de manière à positionner circonférentiellement l'arbre principal (500), dans lequel le corps comprend en outre un arbre d'entraînement (200), un élément de verrouillage (300), et un disque de transmission (400), dans lequel l'élément de verrouillage (300) est monté rotatif sur une face d'extrémité du manchon fixe (800), l'arbre d'entraînement (200) entraîne le disque de transmission (400) au ralenti de sorte que l'élément de verrouillage (300) déverrouille l'arbre principal (500) pour qu'il tourne ou verrouille l'arbre principal (500) pour qu'il ne tourne pas, dans lequel, lorsque l'élément de verrouillage (300) déverrouille l'arbre principal (500) pour qu'il tourne, l'arbre d'entraînement (200) entraîne, par l'intermédiaire du disque de transmission (400), l'arbre principal (500) pour qu'il tourne, et dans lequel, lorsque l'attelage (100) est disposé en position pliée ou dépliée, l'élément de verrouillage (300) verrouille l'arbre principal (500) pour qu'il ne tourne pas, **caractérisé en ce que** l'élément de verrouillage (300) se réfère à une griffe, une fente d'entraînement (410) est prévue sur le disque de transmission (400), et une fente de verrouillage (510) est prévue sur l'arbre principal (500), de sorte que lorsque la griffe est encliquetée dans la fente d'entraînement (410) et la fente de verrouillage (510), la griffe verrouille l'arbre principal (500) pour qu'il ne tourne pas ; et lorsque le disque de transmission (400) tourne pour libérer la griffe de la fente d'entraînement (410) et de la fente de verrouillage (510), la griffe déverrouille l'arbre principal (500) pour qu'il puisse tourner.

2. Coupleur d'attelage de remorque selon la revendication 1, dans lequel l'arbre principal (500) ou le manchon fixe (800) est pourvu d'une rainure de montage (501), dans lequel l'ensemble élastique (540) comprend un élément élastique (541) et un élément de positionnement (542), et dans lequel une extrémité de l'élément élastique (541) est insérée dans la rainure de montage (501) et l'autre extrémité de l'élément élastique (541) est reliée à l'élément de positionnement (542), l'élément de positionnement (542) étant poussé par l'élément élastique (541) pour être inséré dans la rainure de positionnement (830).

3. Coupleur d'attelage de remorque selon la revendication 2, dans lequel la rainure de positionnement (830) se réfère à une rainure en forme d'arc, l'élément de positionnement (542) se réfère à une bille d'acier ou à une goupille de positionnement dont une extrémité a une surface sphérique et est insérée dans la rainure de positionnement (830).

4. Coupleur d'attelage de remorque selon la revendication 1, dans lequel la griffe est pourvue d'un ressort de torsion (310) configuré pour entraîner la griffe à se réinitialiser ; et lorsque la griffe est réinitialisée, la griffe est encliquetée dans la fente d'entraînement (410) et la fente de verrouillage (510).

5. Coupleur d'attelage de remorque selon la revendication 1, dans lequel un poste de transmission (420) est prévu sur le disque de transmission (400), et une rainure de transmission en forme d'arc (520) est prévue coaxialement sur l'arbre principal (500), dans lequel ledit poste de transmission (420) est inséré dans la rainure de transmission en forme d'arc (520), de sorte que lorsque le disque de transmission (400) entraîne le poste de transmission (420) pour se déplacer d'une partie centrale de la rainure de transmission en forme d'arc (520) à une partie d'extrémité de la rainure de transmission en forme d'arc (520), la griffe est libérée de la fente d'entraînement (410) et de la fente de verrouillage (510).

6. Coupleur d'attelage de remorque selon l'une quelconque des revendications 1 à 5, dans lequel le corps comprend en outre une plaque de connexion (600), la plaque de connexion (600) étant fixée à la carrosserie du véhicule, le manchon fixe (800) et l'arbre principal (500) traversant la plaque de connexion (600) ; et un disque d'étanchéité est prévu entre l'attelage (100) et la plaque de connexion (600).

7. Coupleur d'attelage de remorque selon la revendication 6, dans lequel l'attelage (100) a une fente de limitation, et l'arbre principal (500) est pourvu d'une surface d'épaulement de limitation, dans lequel la face d'extrémité du manchon fixe (800) et la surface d'épaulement de limitation viennent en butée contre une surface inférieure de la fente de limitation, respectivement, et un côté périphérique extérieur du manchon fixe (800) est ajusté à une paroi latérale de la fente de limitation.

8. Coupleur d'attelage de remorque selon la revendication 7, dans lequel une extrémité de l'arbre principal (500) est reliée à un écrou qui fixe par pression l'attelage (100) sur la surface de l'épaulement de limitation, et un capuchon de protection pour masquer l'arbre principal (500) est prévu pour couvrir un côté extérieur de l'écrou, le capuchon de protection étant solidement relié à l'attelage (100) par l'intermédiaire de boulons.
